(19) Europäisches Patentamt
European Patent Office
Office européen des brevets

(11) EP 2 611 646 B1

(12) EUROPÄISCHE PATENTSCHRIFT

(45) Veröffentlichungstag und Bekanntmachung des Hinweises auf die Patenterteilung:
07.11.2018 Patentblatt 2018/45

(51) Int Cl.:
B60L 11/18 (2006.01)    H02J 7/00 (2006.01)

(21) Anmeldenummer: 11754844.6

(22) Anmeldetag: 09.08.2011

(86) Internationale Anmeldenummer:
PCT/EP2011/063652

(87) Internationale Veröffentlichungsnummer:
WO 2012/028427 (08.03.2012 Gazette 2012/10)

(54) **VERFAHREN ZUM AUSBALANCIEREN VON LADEZUSTÄNDEN EINER BATTERIE MIT MEHREREN BATTERIEZELLEN SOWIE EIN ENTSPRECHENDES BATTERIEMANAGEMENTSYSTEM UND EINE BATTERIE**

METHOD FOR BALANCING OUT STATES OF CHARGE OF A BATTERY HAVING A PLURALITY OF BATTERY CELLS, AND A CORRESPONDING BATTERY MANAGEMENT SYSTEM AND BATTERY

PROCÉDÉ D'ÉQUILIBRAGE D'ÉTATS DE CHARGE D'UNE BATTERIE DOTÉE DE PLUSIEURS CELLULES DE BATTERIE, SYSTÈME DE GESTION DE BATTERIE CORRESPONDANT ET BATTERIE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 30.08.2010 DE 102010039913

(43) Veröffentlichungstag der Anmeldung:
10.07.2013 Patentblatt 2013/28

(73) Patentinhaber:
• Samsung SDI Co., Ltd.
Gyeonggi-do (KR)
• Robert Bosch GmbH
70442 Stuttgart (DE)

(72) Erfinder:
• BOEHM, Andre
70806 Kornwestheim (DE)
• SCHINDLER, Frank
72762 Reutlingen (DE)

(74) Vertreter: Bee, Joachim et al
Robert Bosch GmbH
Zentralabteilung Patente
Postfach 30 02 20
70442 Stuttgart (DE)

(56) Entgegenhaltungen:
EP-A2- 1 283 121      WO-A1-2009/149690
US-A1- 2009 128 094

**Beschreibung**

Die vorliegende Erfindung betrifft ein Verfahren zum Ausbalancieren von Ladezuständen einer Batterie mit mehreren Batteriezellen, ein Batteriemanagementsystem, welches das erfindungsgemäße Verfahren umfasst, eine Batterie, insbesondere eine Lithium-Ionen-Batterie, mit dem erfindungsgemäßen Batteriemanagementsystem sowie ein Kraftfahrzeug mit der erfindungsgemäßen Batterie. Die Batterie kann insbesondere zum Antrieb des Kraftfahrzeuges eingesetzt werden.

Stand der Technik

Für die Zukunft ist sowohl bei stationären Anwendungen, wie z. B. Windkraftanlagen, Notstromaggregaten oder Inselnetzen, als auch in Fahrzeugen, wie beispielsweise Hybrid- oder reinen Elektrofahrzeugen, zu erwarten, dass vermehrt Batteriesysteme zum Einsatz kommen werden, an die hohe Anforderungen bezüglich nutzbarem Energieinhalt, Lade-Entlade-Wirkungsgrad und Zuverlässigkeit gestellt werden.

Um den Anforderungen hinsichtlich verfügbarem Energieinhalt, maximaler Leistung und Gesamtspannung gerecht zu werden, werden viele einzelne Batteriezellen in Serie und teilweise zusätzlich parallel geschaltet. So werden in Hybrid- und Elektrofahrzeugen Batteriepacks in Li-Ionen oder NiMH-Technologie eingesetzt, die aus einer großen Anzahl in Serie geschalteten elektrochemischen Zellen bestehen.

Eine solche hohe Zahl von in Serie geschalteten Batteriezellen bringt einige Probleme mit sich. Aus Sicherheitsgründen und zur Erzielung einer hinreichenden Genauigkeit bei der Spannungsmessung müssen die Zellspannungen der einzelnen Batteriezellen einzeln gemessen und auf die Einhaltung von Ober- und Untergrenzen hin überprüft werden. Wegen der Serienschaltung der Batteriezellen werden alle Batteriezellen vom gleichen Strom durchflossen, das heißt, die Menge der beim Entladen entnommenen bzw. beim Aufladen eingebrachten Ladung ist auch für alle Batteriezellen identisch. Infolgedessen begrenzt die Zelle mit der geringsten Kapazität die Gesamtladung des Packs. Da in der Regel für elektrochemische Zellen ein direkter Zusammenhang zwischen Kapazitätsverlust und Innenwiderstandserhöhung besteht, weist die Zelle mit der geringsten Kapazität in der Regel auch die geringste Leistung auf. Weicht daher die Kapazität einer Batteriezelle, z. B. durch Alterung, von der einer anderen ab, können die Batteriezellen mit einer höheren Kapazität nur so weit aufgeladen werden, wie die Batteriezelle mit der niedrigsten Kapazität. Außerdem führt der Defekt einer einzelnen Batteriezelle zum Ausfall der gesamten Batterie, weil kein Strom mehr durch die defekte Batteriezelle und damit durch die Batterie fließen kann.

Ein Maß für die in einer Batteriezelle gespeicherte Energiemenge ist der so genannte Ladezustand oder State-of-Charge (SOC). Dabei ist anzumerken, dass die anfänglichen Ladezustände der Batteriezellen beim Zusammenbau zu einer Batterie nie genau gleich sein werden. Außerdem unterscheiden sich die Batteriezellen aufgrund einer gewissen Produktstreuung bei der Herstellung immer geringfügig in ihren Parametern und somit auch in ihrer Reaktion des Ladezustandes auf einen von außen eingeprägten Strom. Durch Alterung der Batteriezellen können sich diese Unterschiede weiter vergrößern.

Das Dokument WO 2009149690 offenbart ein Verfahren zum Ausbalancieren von Ladezuständen einer Batterie mit einer Anzahl von N Batteriezellen , umfassend die Schritte: Bestimmung der individuellen aller n=1 bis N Zellen; Bestimmung eines Zielladezustands für alle n=1 bis N Zellen. Wenn für einzelne Batteriezelle das Zielladezustand erreicht wird, dann wird das Verfahren beendigt.

Es ist bekannt, ein Batteriemanagementsystem zur Überwachung der Ladezustände einer Batterie einzusetzen. Es soll neben der Sicherheitsüberwachung eine möglichst hohe Lebensdauer der Batterie gewährleisten und sicherstellen, dass die Ladezustände der einzelnen Zellen aufeinander abgestimmt werden. Dies geschieht durch eine geeignete Zellsymmetrisierung, das so genannte "Cell Balancing". Die Zellsymmetrisierung oder Ausbalancierung der Ladezustände wird in der Regel resistiv vorgenommen. Dazu wird zu jeder Zelle ein Widerstand und ein Schaltelement vorgesehen, um einzelne Zellen gezielt entladen zu können. Aus der DE 10 2006 022 394 A1 ist eine Vorrichtung zum Ladungsabgleich einer Energiequelle mit mehreren Zellen bekannt, bei der die Zellen mit einer Entladeeinheit zum Ladungsabgleich verbunden sind, die die Zellen wenigstens teilweise entlädt. Nach dem Stand der Technik ist es aber auch möglich, das Zellbalancing kapazitiv - das heißt mit geschalteten Kondensatoren - bzw. induktiv - also mittels geschalteter Induktivitäten - durchzuführen. In diesen beiden Fällen kann Energie zwischen den Zellen mit beschränktem Wirkungsgrad ausgetauscht werden, während die Energie beim resistiven Zellbalancing nur in Wärme umgewandelt werden kann und somit verloren geht.

Für Hybridfahrzeuge ist zu jedem Zeitpunkt eine hohe Leistungsfähigkeit sowohl in Laderichtung zur Rekuperation als auch in Entladerichtung zur Beschleunigung von Vorteil. Es ist bekannt, dass die maximal erlaubte Ladeleistung mit steigendem Ladezustand abnimmt, während die maximal erlaubte Entladeleistung zunimmt. Aus diesem Grund wäre es nach dem Stand der Technik für Hybridfahrzeuge wünschenswert, ein Batteriepack für Hybridfahrzeuge bei einem Ladezustand von 50 % zu betreiben, um immer eine hohe Leistung sicherzustellen. In der Regel wird in der Praxis jedoch ein Betriebsfenster eingesetzt, zum Beispiel zwischen 40 % und 60 % Ladezustand. Für so genannte "Plugin-Hybride" ist das Betriebsfenster entsprechend größer, zum Beispiel 10 % bis 90 % Ladezustand.

Für reine Elektrofahrzeuge ist hingegen der Energiegehalt das wichtigste Kriterium. Hier geht es im Gegensatz zu Hybridfahrzeugen weniger um kurzfristige Beschleunigung, sondern mehr darum, die Betriebsbereitschaft des Fahrzeuges über einen möglichst langen Zeitraum sicherzustellen und zu jedem Zeitpunkt die größtmögliche Energie zur Verfügung zu stellen.

Eine Balancing-Strategie des Standes der Technik versucht einen stets gleichen Ladezustand aller Zellen zu erzielen. Dazu wird in der Regel auf identische Ruhespannung aller Zellen symmetrisiert. Bei neuwertigen Zellen mit nahezu identischer Kapazität ist diese Strategie gerechtfertigt. Für Zellen unterschiedlicher Kapazität, wie sie sich durch Produktionsstreuungen und Alterung einstellt, führt diese Balancing-Strategie allerdings zu unnötigen Energieverlusten durch das Balancing.

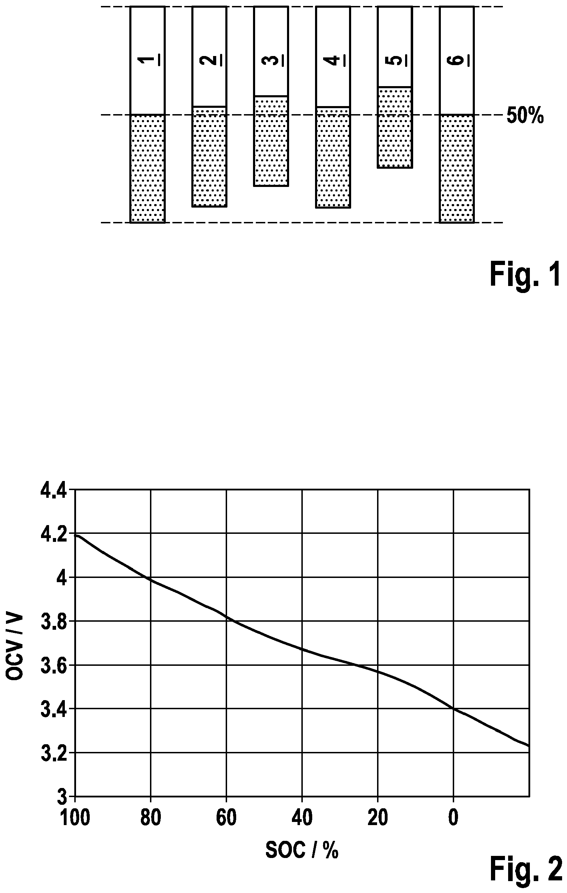

Figur 1 zeigt beispielhaft sechs elektrochemische Zellen mit unterschiedlichen Ladekapazitäten aufgrund von Alterung, die nach einem solchen Verfahren zur Balancierung des Standes der Technik auf einen individuellen Ladezustand von 50 % gebracht wurden. Wird das Batteriepack nun so lange entladen, bis die Zelle mit der niedrigsten Kapazität, welche in dem Beispiel die Zelle 5 ist, fast vollständig entladen ist, haben alle anderen Zellen individuell gesehen höhere Ladezustände. Bei fortgesetztem Ausbalancieren nach obiger Strategie werden sie daher entladen, bis sie ebenfalls den individuellen Ladezustand von Zelle 5 erreicht haben. Das bedeutet jedoch, dass in allen Zellen außer der mit der geringsten Kapazität unnötig Energie vernichtet werden muss.

Offenbarung der Erfindung

Die Erfindung betrifft ein Verfahren zum Ausbalancieren gemäss Anspruch 1 und ein Batteriemanagementsystem gemäss Anspruch 7.

Erfindungsgemäß wird ein Verfahren zum Ausbalancieren von Ladezuständen einer Batterie mit einer Anzahl von N Batteriezellen vorgestellt, wobei zur Ausbalancierung der individuellen Ladezustände der $n=1$ bis N Zellen der Ladezustand $SOC_n$ mindestens einer Zelle auf einen Zielladezustand $SOC_{Ziel,n}$ verändert wird, der von der Entladetiefe $DOD_k$ der Zelle mit der kleinsten Kapazität $Cap_k$ gemäß der Gleichung $SOC_{Ziel,n} = 1 - DOD_k/Cap_n$ abhängt, wobei $Cap_n$ die Kapazität der zu verändernden Zelle ist.

Bevorzugt gilt dies nur soweit, wie ein Ausbalancieren vonnöten oder möglich ist, bis also ein Abbruchkriterium des Ausbalancierens erfüllt ist. Dieses Abbruchkriterium kann von einer Funktion der Differenz aus gegenwärtigem Ladezustand der betreffenden Zelle und Zielladezustand abhängen. Ein Abbruchkriterium wäre $f(SOC_n - SOC_{Ziel,n}) > A$, mit A als festzulegendem Schwellenwert.

Mittels des Verfahrens werden die Ladezustände von individuellen elektrochemischen Batteriezellen einer Batterie ausbalanciert. Das erfindungsgemäße Verfahren mit den Merkmalen des unabhängigen Anspruchs hat den Vorteil, dass die Energieverluste im Rahmen einer Ausbalancierung der Ladezustände gegenüber dem Stand der Technik reduziert werden. Dabei wird gleichzeitig der Energiegehalt der Zellen optimiert. Ferner wird die Dauer der Ausbalancierung reduziert. Es muss zur Ausbalancierung keine weitere Hardware eingesetzt werden. Das Verfahren kann als Computerprogramm in Software realisiert werden und ist daher kostengünstig umzusetzen.

Im Detail umfasst das Verfahren zunächst den Schritt der Bestimmung der individuellen Zellenkapazitäten $Cap_n$ aller $n=1$ bis N Zellen. Darauf folgt die Bestimmung einer k-ten Zelle mit der kleinsten Zellkapazität $Cap_k$ der $n=1$ bis N Zellen und die Bestimmung der individuellen Ladzustände $SOC_n$ aller $n=1$ bis N Zellen. Es folgt die Bestimmung der Entladetiefe $DOD_n$ aller $n=1$ bis N Zellen. Dies kann bevorzugt gemäß der Gleichung $DOD_n = Cap_n - SOC_n * Cap_n$ geschehen. In einem weiteren Schritt wird dann eine Zielentladetiefe $DOD_{Ziel,n}$ für alle $n=1$ bis N Zellen festgelegt, wobei $DOD_{Ziel,n} = DOD_k$, also die Zielentladetiefe gleich der Entladetiefe der Zelle mit der kleinsten Kapazität ist. Aus der Zielentladetiefe wird der Zielladezustand $SOC_{Ziel,n}$ für alle $n=1$ bis N Zellen aus $SOC_{Ziel,n} = 1 - DOD_{Ziel,n}/Cap_n$ bestimmt. Danach wird die Abweichung des Ladezustands $SOC_n$ einer Zelle von ihrem Zielladezustand $SOC_{Ziel,n}$ für alle $n=1$ bis N Zellen bestimmt, gemäß $\Delta SOC_{Ziel,n} = SOC_n - SOC_{Ziel,n}$. In einem weiteren Schritt wird dann die minimale Abweichung $\Delta SOC_{min}$ des Ladezustands $SOC_n$ einer Zelle von ihrem Zielladezustand $SOC_{Ziel,n}$ für alle $n=1$ bis N Zellen aus $\Delta SOC_{min} = \min(\Delta SOC_{Ziel,n})$ bestimmt. Es erfolgt dann die Entladung mindestens einer der $n=1$ bis N Zellen für die gilt $\Delta SOC_{Ziel,n} - \Delta SOC_{min} > X$, wobei X ein Parameter mit $X > 0$ ist. Gilt nun für alle der $n=1$ bis N Zellen $\Delta SOC_{Ziel,n} - \Delta SOC_{min} \leq X$, dann wird das Verfahren beendet. Gilt dies jedoch nicht, ist also für mindestens eine Zelle $\Delta SOC_{Ziel,n} - \Delta SOC_{min} > X$, dann wird zum Schritt der Bestimmung der individuellen Ladezustände zurückgekehrt und die darauf folgenden Schritte werden wiederholt.

Bevorzugt können im Schritt der Entladung alle Zellen mit $\Delta SOC_{Ziel,n} - \Delta SOC_{min} > X$ entladen werden, noch bevorzugter gleichzeitig. Dies verringert die Dauer der Ausbalancierung weiter.

Die Rückkehr zum Schritt der Bestimmung der Ladezustände kann bevorzugt in vordefinierten Zeitabständen vorgenommen werden. Sie kann aber auch kontinuierlich erfolgen.

Bevorzugt wird der Ladezustand in Prozenten angegeben und der Parameter X ist bevorzugt größer Null und kleiner als 6 %, noch bevorzugter kleiner als 3 %.

Das Verfahren kann vorteilhafterweise auch zum kapazitiven und induktiven Ausbalancieren von Ladezuständen eingesetzt werden. Es umfasst dann ferner nach dem Schritt der Entladung und vor dem Schritt des Zurückkehrens zur Bestimmung der Ladezustände den Schritt der Zuführung des Entladestroms der entladenden Zellen zur Aufladung mindestens einer der n=1 bis N Zellen, für die gilt $\Delta SOC_{Ziel,n} - \Delta SOC_{min} < Y$, wobei $X > Y$.

In einem bevorzugten Ausführungsbeispiel werden alle Zellen mit $\Delta SOC_{Ziel,n} - \Delta SOC_{min} < Y$ aufgeladen, noch bevorzugter gleichzeitig.

Entsprechend wird ein Batteriemanagementsystem für eine Batterie, insbesondere eine Li-Ionen-Batterie, vorgeschlagen, welches das oben beschriebene erfindungsgemäße Verfahren umfasst.

Analog wird eine Batterie, insbesondere eine Li-Ionen-Batterie, angegeben, mit einem erfindungsgemäßen Batteriemanagementsystem sowie ein Kraftfahrzeug mit einer erfindungsgemäßen Batterie.

Vorteilhafte Weiterbildungen der Erfindung sind in den Unteransprüchen angegeben und in der Beschreibung beschrieben.

Zeichnungen

Ausführungsbeispiele der Erfindung sind in den Zeichnungen dargestellt und in der nachfolgenden Beschreibung näher erläutert.

Es zeigen

Figur 1 die Ladezustände und Kapazitäten einer Batterie des Standes der Technik mit sechs Einzelzellen und individuellen Ladezuständen von 50 %,

Figur 2 die Abhängigkeit der Ruhespannung eines elektrochemischen Speichers vom Ladezustand,

Figur 3 das erfindungsgemäße Verfahren zur Ausbalancierung der Ladezustände von Einzelzellen einer Batterie in einer schematischen Darstellung,

Figur 4 die Ladezustände und Kapazitäten einer Batterie mit sechs Einzelzellen bei 100 % Packladezustand nach dem erfindungsgemäßen Verfahren, und

Figur 5 ein Ergebnis der erfindungsgemäßen Ausbalancierung einer Batterie.

Ausführungsformen der Erfindung.

Die vorliegende Erfindung betrifft ein Verfahren zur Ausbalancierung der Ladezustände einzelner Zellen einer Batterie bzw. eines Batteriepacks, insbesondere einer Li-Ionen-Batterie bzw. eines Li-Ionen-Batteriepacks.

Figur 2 zeigt die Abhängigkeit der Ruhespannung einer elektrochemischen Zelle vom Ladezustand. Dargestellt ist die OCV-Kennlinie (open circuit voltage) einer Li-Ionen-Zelle. Es gilt, dass die Ruhespannung mit dem Ladezustand für elektrochemische Speichersysteme steigt. Dies geschieht je nach Ladezustand im unterschiedlichen Ausmaß.

Für Zellen, die in einem Batteriepack nur in einem Kapazitätsfenster betrieben werden können, welches kleiner als die Gesamtkapazität der Zelle ist, ist es erfindungsgemäß von Vorteil, das Kapazitätsfenster in den oberen Ladezustandsbereich zu legen. In Figur 1 gilt dies für alle Zellen außer der Zelle mit der geringsten Kapazität. In diesem Fenster ist die Zellspannung im Schnitt höher als in jedem anderen Bereich. Die entnehmbare Energie ist infolgedessen in diesem Fenster maximal. Darüber hinaus nimmt der Innenwiderstand für viele Zelltypen mit steigendem Ladezustand ab, was die entnehmbare Energie weiter erhöht.

Im folgenden Verfahren wird der Ladezustand mit "SOC" (State of Charge) in Prozent angeben, wobei 100 % dem Zustand entspricht, im dem die Zelle voll geladen ist. Die Kapazität einer Zelle wird mit "Cap" abgekürzt und im Folgenden in der Einheit "Ah" angeben. Die Entladetiefe wird mit DOD (Depth of Discharge) abgekürzt und ebenfalls in "Ah" angeben. Bei einer Entladetiefe von 0 Ah ist die Zelle voll geladen. Die Entladetiefe berechnet sich aus DOD = (1-SOC)*Cap.

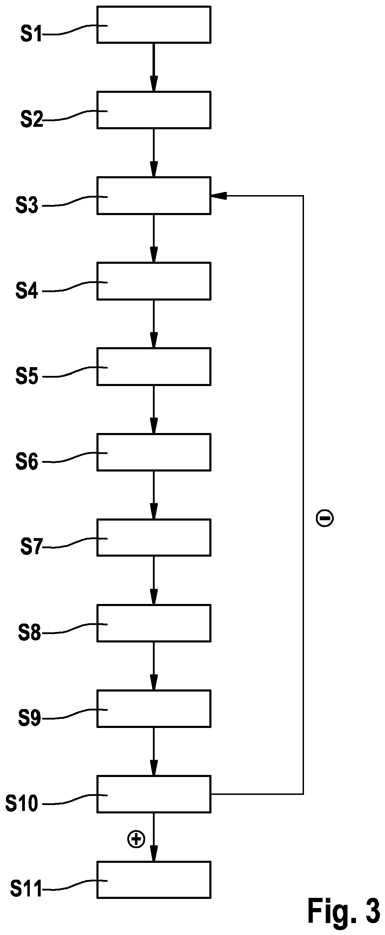

Zur Balancierung sämtlicher N Zellen eines Batteriepacks in der Art, dass die Energie optimiert wird, kann das folgende Verfahren vorteilhaft angewendet werden (siehe Figur 3):

S1    Bestimmung der individuellen
      Zellenkapazitäten $Cap_n$ aller n=1 bis N Zellen;

(fortgesetzt)

| S2 | Bestimmung einer k-ten Zelle mit einer kleinsten Zellkapazität $Cap_k$ der n=1 bis N Zellen; | |
| S3 | Bestimmung der individuellen Ladzustände $SOC_n$ aller n=1 bis N Zellen; | |
| S4 | Bestimmung der Entladetiefe $DOD_n$ aller n=1 bis N Zellen; bevorzugt geschieht dies aus: | $DOD_n = Cap_n - SOC_n * Cap_n$; |
| S5 | Bestimmung einer Zielentladetiefe $DOD_{Ziel,n}$ für alle n=1 bis N Zellen aus: | $DOD_{Ziel,n} = DOD_k$; |
| S6 | Bestimmung eines Zielladezustands $SOC_{Ziel,n}$ für alle n=1 bis N Zellen aus: | $SOC_{Ziel,n} = 1 - DOD_{Ziel,n}/Cap_n$; |
| S7 | Berechnung der Abweichung des Ladezustands $SOC_n$ einer Zelle von ihrem Zielladezustand $SOC_{Ziel,n}$ für alle n=1 bis N Zellen: | $\Delta SOC_{Ziel,n} = SOC_n - SOC_{Ziel,n}$; |
| S8 | Berechnung der minimalen Abweichung $\Delta SOC_{min}$ des Ladezustands $SOC_n$ einer Zelle von ihrem Zielladezustand $SOC_{Ziel,n}$ für alle n=1 bis N Zellen: | $\Delta SOC_{min} = min\ \Delta SOC_{Ziel,n}$; |
| S9 | Entladung mindestens einer der n=1 bis N Zellen, für die gilt: | $\Delta SOC_{Ziel,n} - \Delta SOC_{min} > X$, wobei X ein Parameter mit X > 0 ist; |
| S10 | Wenn für alle der n=1 bis N Zellen | $\Delta SOC_{Ziel,n} - \Delta SOC_{min} \leq X$ gilt, dann wird zum nächsten Schritt S11 gesprungen; gilt dies nicht für alle Zellen, dann wird zum Schritt S3 der Bestimmung der individuellen Ladezustände S3 zurückgekehrt und die darauf folgenden Schritte werden wiederholt; |
| S11 | Beendigung des Verfahrens. | |

Das obige Verfahren bezieht sich dabei zunächst auf das resistive Ausbalancieren von Ladezuständen. Beim resistiven Ausbalancieren können die Zellen lediglich entladen werden, so dass es beim resistiven Ausbalancieren nur auf die Entladung des Schrittes S9 ankommt. In einem anderen Ausführungsbeispiel wird auch das kapazitive oder induktive Ausbalancieren beschrieben werden, bei dem Zellen auch aufgeladen werden können.

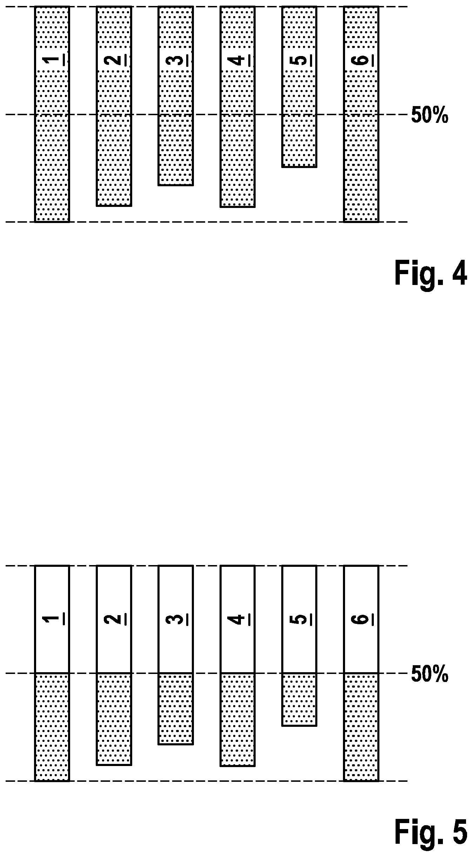

Im erfindungsgemäßen Balancingverfahren werden sämtliche Zellen eines Batteriepacks so balanciert, dass sie bei nachfolgender Aufladung der Batterie, z. B. über eine Steckdose, auf einen Packladezustand von 100 % jeweils einen individuellen Ladezustand von 100 % aufweisen. Dies geschieht durch die Abhängigkeit des Zielladezustands $SOC_{Ziel,n}$ von der Entladetiefe $DOD_k$ der Zelle "k" mit der kleinsten Kapazität und ist für die sechs Zellen der Figur 1 in Figur 4 dargestellt. Da auf diese Weise jede Batteriezelle stets im höchstmöglichen SOC-Fenster und somit mit höchstmöglicher Spannungslage betrieben wird (siehe Figur 2), steht im Mittel die höchstmögliche Batterie-Spannung zur Verfügung. Daher wird durch das erfindungsgemäße Verfahren der Energiegehalt als Integral von Ladungsmenge pro Zeit multipliziert mit der Spannung optimiert.

Das erfindungsgemäße Verfahren zum Ausbalancieren kann nicht nur unter Last eingesetzt werden, sondern auch während eines Aufladevorganges durch eine externe Energiequelle.

Bei niedrigeren Packladezuständen stellen sich für jede Zelle unterschiedliche individuelle Ladezustände ein, abhängig von der jeweiligen Zellkapazität. Dies ist exemplarisch für ein Batteriepack mit N=6 Batteriezellen in Figur 5 gezeigt.

Wenn die Zelle mit der geringsten Kapazität, also Zelle 5, vollständig entladen ist, behalten alle übrigen Zellen nach dem erfindungsgemäßen Verfahren zur Ausbalancierung ihren Ladungsinhalt und werden nicht weiter entladen.

Das erfindungsgemäße Verfahren ist in bevorzugter Ausführungsform ein Teil eines Batteriemanagementsystems einer Batterie. Im Folgenden wird daher beispielhaft beschrieben werden, dass das erfindungsgemäße Verfahren durch ein Batteriemanagementsystem ausgeführt wird. Dies geschieht aber nicht beschränkend, sondern lediglich beispielhaft.

Die jeweiligen Größen, die für den Verlauf des Verfahrens nötig sind, können im Folgenden mathematisch berechnet oder auf andere Art und Weise, z. B. durch Kennblätter bestimmt oder gemessen werden.

Bevorzugt werden im Schritt S1 die Zellkapazitäten durch ein Batteriemanagementsystem bestimmt bzw. gemessen. Dann wird aus den gewonnenen Daten im nächsten Schritt S2 die Zelle mit der geringsten Zellkapazität bestimmt. Aufgrund der Reihenschaltung der Zellen begrenzt die Zelle mit der geringsten Kapazität die Gesamtladung des Packs. Im erfindungsgemäßen Verfahren wird die Ausbalancierung mit Bezug auf die Entladetiefe der Zelle mit der geringsten Kapazität vorgenommen. Im Schritt S3 wird der Ladezustand jeder einzelnen elektrochemischen Zelle der Batterie bestimmt oder gemessen. Dies geschieht wiederum bevorzugt mit Hilfe des Batteriemanagementsystems. Aus dem individuellen Ladezustand wird dann die Entladetiefe mittels der im Schritt S4 angegebenen Gleichung berechnet oder anderweitig bestimmt oder gemessen. Daraus wird dann im Schritt S5 die gewünschte Zielentladetiefe für jede Zelle gleich der Entladetiefe der Zelle mit der geringsten Kapazität gesetzt. Keine Zelle kann somit über die Entladetiefe der Zelle mit der geringsten Kapazität entladen werden. Aus der Zielentladetiefe wird dann der Zielladezustand nach der oben im Schritt S6 angegebenen Gleichung berechnet. Für eine Ausbalancierung wird im Schritt S7 die Abweichung des gegenwärtigen Ladezustands vom Zielladezustand $\Delta SOC_{Ziel,n} = SOC_n - SOC_{Ziel,n}$ für jede Zelle bestimmt bzw. berechnet. Es wird daraufhin aus den Abweichungen die minimale Abweichung $\Delta SOC_{min}$ bestimmt (S8). Ist die Differenz aus der Abweichung $\Delta SOC_{Ziel,n} = SOC_n - SOC_{Ziel,n}$ und der minimalen Abweichung $\Delta SOC_{min}$ nun größer als ein Parameter X, der vordefiniert oder wählbar ist, wird mindestens eine derjenigen Zellen, für die dies gilt, entladen (S9). Bevorzugt werden alle Zellen gleichzeitig entladen. Im Schritt S10 wird geprüft, ob tatsächlich eine Zelle entladen wird bzw. zu entladen ist. Wird dies bejaht, wird zum Schritt S3 zurückgesprungen und das Verfahren wird von dort wieder aufgenommen. Ist jedoch keine Zelle mehr zu entladen, wird zum nächsten Schritt gesprungen und das Verfahren beendet (S11).

Der Rücksprung im Schritt S10 kann dabei kontinuierlich erfolgen (wenn die Rechenzeit klein gegenüber dem Entladevorgang ist) oder aber diskret in festen Zeitabständen, z. B. 1-10 Mal pro Sekunde. Je nach Genauigkeit des Verfahrens kann aber auch ein Zeitraum von Minuten sinnvoll sein. Es handelt sich also um ein iteratives Verfahren, bei dem der Parameter X angibt, wie genau auszubalancieren ist. Der Parameter X kann ein Element der reellen oder natürlichen positiven Zahlen sein. X kann kleiner 10 % sein, bevorzugt ist X kleiner als 6 %, noch bevorzugter kleiner als 3 %. Ein höherer Parameter beschleunigt das Verfahren, macht die Anpassung aber ungenauer. Ein niedriger Parameter führt zu einer niedrigeren Bandbreite der individuellen Ladezustände nach der Ausbalancierung, aber längerer Anpassungsdauer.

Tabelle 1 zeigt ein Ausführungsbeispiel des erfindungsgemäßen Verfahrens für die resistive Ausbalancierung einer Batterie, insbesondere einer Li-Ionen-Batterie mit N=6 Einzelzellen. Der Parameter X für die Entladung beträgt dabei beispielhaft 4 %. Wie aus Tabelle 1 ersichtlich, ist die Zelle 3 die Zelle mit der geringsten Kapazität, hier 18,3 Ah, und weist einen Ladezustand von 62 % auf. Die so genannte Zielentladetiefe $DOD_{Ziel}$ der individuellen Zellen wird dann gleich der Entladetiefe dieser Zelle mit der kleinsten Kapazität gesetzt. Zelle 5 müsste nach diesem Verfahren aufgeladen werden, da Ihr Zielladezustand 66 % beträgt, der Ist-Ladezustand jedoch lediglich 63 %. Im reinen resistiven Verfahren ist dies jedoch nicht möglich. Bei einem Schwellenwert für die Abweichung X von 4 % werden im vorliegenden Beispiel im ersten Schritt die Zellen 1, 2, 4 und 6 entladen. Die weiteren Verläufe des iterativen Verfahrens sind nicht dargestellt.

| Zelle | Cap [Ah] | SOC | DOD [Ah] | Min. Cap | $DOD_{Ziel}$ | $SOC_{Ziel}$ | $\Delta SOC_{Ziel}$ | $\Delta SOC_{min}$ | $\Delta SOC_{Ziel}$ - $SOC$ | Aus-balancierun |
|---|---|---|---|---|---|---|---|---|---|---|
| 1 | 19,9 | 67 % | 6,57 | | 6,95 | 65 % | 2 % | | 4,5 % | ja |
| 2 | 18,7 | 66 % | 6,36 | | 6,95 | 63 % | 3 % | | 5,8 % | ja |
| 3 | 18,3 | 62 % | 6,95 | X | 6,95 | 62 % | 0 % | | 2,6 % | |
| 4 | 18,9 | 70 % | 5,67 | | 6,95 | 63 % | 7 % | | 9,4 % | ja |
| 5 | 20,2 | 63 % | 7,47 | | 6,95 | 66 % | -3 % | -3 % | 0,0 % | |
| 6 | 19,6 | 66 % | 6,66 | | 6,95 | 65 % | 1 % | | 4,1 % | ja |

Tabelle 1: Beispiel 1 für eine Batterie mit 6 Einzelzellen mit X = 4 %.

In einem weiteren Ausführungsbeispiel wird das Verfahren auch für kapazitives und induktives Ausbalancieren der Ladezustände adaptiert. Dabei wird im Schritt S9 des Verfahrens der Entladestrom der entladenden Zellen zur Aufladung anderer Zellen verwendet. Es wird dann mindestens eine der Zellen, für die $\Delta SOC_{Ziel,n} - \Delta SOC_{min} < Y$ gilt, aufgeladen, wobei X > Y. Bevorzugt werden alle Zellen, für die die Beziehung gilt, zusammen aufgeladen. Der Parameter Y ist in den angegeben Grenzen bezüglich des Parameters X frei wählbar.

Das erfindungsgemäße Verfahren ist bevorzugt als Software in einem Batteriemanagementsystem einer Batterie implementiert. Diese Softwarelösung ermöglicht eine möglichst kostengünstige und flexible Umsetzung des Verfahrens.

Die Batterie mit dem entsprechenden Batteriemanagementsystem kann Teil eines Kraftfahrzeuges sein. Bevorzugt ist sie ein Teil eines Antriebssystems eines Kraftfahrzeuges und mit dem Motor des Kraftfahrzeuges gekoppelt.

**Patentansprüche**

1. Verfahren zum Ausbalancieren von Ladezuständen einer Batterie mit einer Anzahl von N Batteriezellen, - umfassend die Schritte:

   (S1) Bestimmung einer individuellen Zellenkapazität ($Cap_n$) aller n=1 bis N Zellen;
   (S2) Bestimmung einer k-ten Zelle mit einer kleinsten Zellkapazität ($Cap_k$) der n=1 bis N Zellen;
   (S3) Bestimmung eines individuellen Ladezustands ($SOC_n$) aller n=1 bis N Zellen;
   (S4) Bestimmung einer Entladetiefe ($DOD_n$) aller n=1 bis N Zellen;
   (S5) Bestimmung einer Zielentladetiefe ($DOD_{Ziel,n}$) für alle n=1 bis N Zellen aus:

$$DOD_{Ziel,n} = DOD_k;$$

   (S6) Bestimmung eines Zielladezustands ($SOC_{Ziel,n}$) für alle n=1 bis N Zellen aus:

$$SOC_{Ziel,n} = 1 - DOD_{Ziel,n}/Cap_n;$$

   (S7) Bestimmung einer Abweichung des Ladezustands ($SOC_n$) einer Zelle von ihrem Zielladezustand ($SOC_{Ziel,n}$) für alle n=1 bis N Zellen:

$$\Delta SOC_{Ziel,n} = SOC_n - SOC_{Ziel,n};$$

   (S8) Bestimmung einer minimalen Abweichung ($\Delta SOC_{min}$) des Ladezustands ($SOC_n$) einer Zelle von ihrem Zielladezustand ($SOC_{Ziel,n}$) für alle n=1 bis N Zellen:

$$\Delta SOC_{min} = min (\Delta SOC_{Ziel,n});$$

   (S9) Entladung mindestens einer der n=1 bis N Zellen für die gilt:

$$\Delta SOC_{Ziel,n} - \Delta SOC_{min} > X,$$

   wobei X ein Parameter mit X > 0 ist;
   (S10) wenn für alle der n=1 bis N Zellen $\Delta SOC_{Ziel,n} - \Delta SOC_{min} \leq X$ gilt, dann wird zum nächsten Schritt gesprungen (S11); gilt dies nicht für alle Zellen, dann wird zum Schritt (S3) der Bestimmung der individuellen Ladezustände (S3) zurückgekehrt und die darauf folgenden Schritte werden wiederholt;
   (S11) Beendigung des Verfahrens.

2. Verfahren nach Anspruch 1 wobei im Schritt der Entladung alle Zellen mit $\Delta SOC_{Ziel,n} - \Delta SOC_{min} > X$ entladen werden.

3. Verfahren nach einem der Ansprüche 1 oder 2, wobei die Rückkehr zum Schritt der Bestimmung der individuellen Ladezustände (S3) in vordefinierten Zeitabständen vorgenommen wird.

4. Verfahren nach einem der vorhergehenden Ansprüche 1 bis 3, wobei der Ladezustand (SOC) in Prozenten angegeben ist und der Parameter X größer Null und kleiner als 6 %, bevorzugt kleiner als 3 % ist.

5. Verfahren nach einem der vorhergehenden Ansprüche 1-4, wobei zum kapazitiven und induktiven Ausbalancieren von Ladezuständen der Schritt der Entladung (S9) ferner umfasst: Zuführung des Entladestroms der entladenden Zellen zur Aufladung mindestens einer der n=1 bis N Zellen, für die gilt: $\Delta SOC_{Ziel,n} - \Delta SOC_{min} < Y$, wobei X > Y.

6. Verfahren nach Anspruch 5, wobei alle Zellen mit $\Delta SOC_{Ziel,n} - \Delta SOC_{min} < Y$ gleichzeitig aufgeladen werden.

7. Batteriemanagementsystem für eine Batterie umfassend ein Mittel zur Durchführung des Verfahren nach einem der Ansprüche 1 bis 6.

**8.** Batterie, insbesondere eine Li-Ionen-Batterie, mit einem Batteriemanagementsystem nach Anspruch 7.

**9.** Kraftfahrzeug mit einer Batterie nach Anspruch 8.

**Claims**

**1.** Method for balancing states of charge of a battery having a number of N battery cells, comprising the steps:

(S1) Determination of an individual cell capacity ($Cap_n$) of all the n=1 to N cells;
(S2) Determination of a k-th cell with the lowest cell capacity ($Cap_k$) of the n=1 to N cells;
(S3) Determination of an individual state of charge ($SOC_n$) of all the n=1 to N cells;
(S4) Determination of a depth of discharge ($DOD_n$) of all the n=1 to N cells;
(S5) Determination of the target depth of discharge ($DOD_{Target,n}$) for all the n=1 to N cells from:

$$DOD_{Target,n} = DOD_k;$$

(S6) Determination of a target state of charge ($SOC_{Target,n}$) for all the n=1 to N cells from:

$$SOC_{Target,n} = 1 - DOD_{Target,n}/Cap_n;$$

(S7) Determination of a deviation of the state of charge ($SOC_n$) of a cell from its target state of charge ($SOC_{Target,n}$) for all the n=1 to N cells:

$$\Delta SOC_{Target,n} = SOC_n - SOC_{Target,n};$$

(S8) Determination of a minimum deviation ($\Delta SOC_{min}$) of the state of charge ($SOC_n$) of a cell from its target state of charge ($SOC_{Target,n}$) for all the n=1 to N cells:

$$\Delta SOC_{min} = min\ (\Delta SOC_{Target,n});$$

(S9) Discharging of at least one of the n=1 to N cells for which the following applies:

$$\Delta SOC_{Target,n} - \Delta SOC_{min} > X,$$

where X is a parameter for which X > 0;
(S10) if $\Delta SOC_{Target,n} - \Delta SOC_{min} \leq X$ applies to all of the n=1 to N cells, the process jumps to the next step (S11); if this does not apply to all the cells, the process returns to the step (S3) of the determination of the individual states of charge (S3) and the following steps are repeated;
(S11) Ending of the method.

**2.** Method according to Claim 1, wherein in the discharging step, all the cells for which $\Delta SOC_{Target,n} - \Delta SOC_{min} > X$ applies are discharged.

**3.** Method according to either of Claims 1 and 2, wherein the return to the step of determining the individual states of charge (S3) is performed at predefined time intervals.

**4.** Method according to one of the preceding Claims 1 to 3, wherein the state of charge (SOC) is specified in percentages and the parameter X is greater than zero and smaller than 6%, preferably smaller than 3%.

**5.** Method according to one of the preceding Claims 1 - 4, wherein, in order to balance states of charge capacitively and inductively, the discharging step (S9) also comprises:
feeding in the discharge current of the discharged cells in order to charge at least one of the n=1 to N cells, for which the following applies: $\Delta SOC_{Target,n} - \Delta SOC_{min} < Y$, where $X > Y$.

**6.** Method according to Claim 5, wherein all the cells for which $\Delta SOC_{Target,n} - \Delta SOC_{min} < Y$ applies are charged simultaneously.

**7.** Battery management system for a battery comprising a means for carrying out the method according to one of Claims 1 to 6.

**8.** Battery, in particular an Li-ion battery, having a battery management system according to Claim 7.

**9.** Motor vehicle having a battery according to Claim 8.


**Revendications**

**1.** Procédé d'équilibrage d'états de charge d'une batterie comprenant un nombre N de cellules de batterie, comprenant les étapes suivantes :

(S1) détermination d'une capacité de cellule ($Cap_n$) individuelle de toutes les n = 1 à N cellules ;
(S2) détermination d'une k-ème cellule ayant la plus petite capacité de cellule ($Cap_k$) des n = 1 à N cellules ;
(S3) détermination d'un état de charge ($SOC_n$) individuel de toutes les n = 1 à N cellules ;
(S4) détermination d'une profondeur de décharge ($DOD_n$) de toutes les n = 1 à N cellules ;
(S5) détermination d'une profondeur de décharge cible ($DOD_{Ziel,n}$) pour toutes les n = 1 à N cellules à partir de :

$$DOD_{Ziel,n} = DOD_k \ ;$$

(S6) détermination d'un état de charge cible ($SOC_{Ziel,n}$) pour toutes les n = 1 à N cellules à partir de :

$$SOC_{Ziel,n} = 1 - DOD_{Ziel,n}/Cap_n \ ;$$

(S7) détermination d'un écart entre l'état de charge ($SOC_n$) d'une cellule et son état de charge cible ($SOC_{Ziel,n}$) pour toutes les n = 1 à N cellules :

$$\Delta SOC_{Ziel,n} = SOC_n - SOC_{Ziel,n} \ ;$$

(S8) détermination d'un écart minimal ($\Delta SOC_{min}$) entre l'état de charge ($SOC_n$) d'une cellule et son état de charge cible ($SOC_{Ziel,n}$) pour toutes les n = 1 à N cellules :

$$\Delta SOC_{min} = min(\Delta SOC_{Ziel,n}) \ ;$$

(S9) décharge d'au moins l'une des n = 1 à N cellules pour lesquelles :

$$\Delta SOC_{Ziel,n} - \Delta SOC_{min} > X,$$

où X est un paramètre avec X > 0 ;
(S10) si la relation $\Delta SOC_{Ziel,n} - \Delta SOC_{min} \leq X$ est vérifiée pour toutes les n = 1 à N cellules, alors passage à l'étape suivante (S11) ; si elle n'est pas vérifiée pour toutes les cellules, alors retour à l'étape (S3) de détermination des états de charge (S3) individuels et répétition des étapes qui suivent ;
(S11) Fin du procédé.

**2.** Procédé selon la revendication 1, toutes les cellules pour lesquelles $\Delta SOC_{Ziel,n} - \Delta SOC_{min} > X$ étant déchargées dans l'étape de décharge.

**3.** Procédé selon l'une des revendications 1 et 2, le retour à l'étape de détermination des états de charge individuels (S3) s'effectuant à des intervalles de temps prédéfinis.

**4.** Procédé selon l'une des revendications précédentes 1 à 3, l'état de charge (SOC) étant indiqué en pourcentage et le paramètre X étant supérieur à zéro et inférieur à 6 %, de préférence inférieur à 3 %.

**5.** Procédé selon l'une des revendications précédentes 1 à 4, l'étape de décharge (S9), en vue de l'équilibrage capacitif et inductif des états de charge, comprenant en outre :
acheminement du courant de décharge des cellules déchargées pour la charge d'au moins l'une des n = 1 à N cellules pour laquelle la relation $\Delta SOC_{Ziel,n} - \Delta SOC_{min} < Y$ est vérifiée, avec X > Y.

**6.** Procédé selon la revendication 5, toutes les cellules pour lesquelles $\Delta SOC_{Ziel,n} - \Delta SOC_{min} < Y$ étant chargées simultanément.

**7.** Système de gestion de batterie pour une batterie, comprenant un moyen pour mettre en oeuvre le procédé selon l'une des revendications 1 à 6.

**8.** Batterie, notamment batterie aux ions de lithium, comprenant un système de gestion de batterie selon la revendication 7.

**9.** Véhicule automobile équipé d'une batterie selon la revendication 8.

**Fig. 1**

**Fig. 2**

Fig. 3

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009149690 A
- DE 102006022394 A1